# EUROPÄISCHE PATENTSCHRIFT

(11) **EP 3 709 166 B1**
(45) Veröffentlichungstag und Bekanntmachung des Hinweises auf die Patenterteilung: **15.12.2021**
(21) Anmeldenummer: 20154752.8
(22) Anmeldetag: 31.01.2020
(51) Int. Cl.: G06F 11/07, G06F 11/22, G06F 11/26, G06F 11/263, G05B 15/02, B60W 50/00, B60W 50/04

(54) **VERFAHREN UND SYSTEM ZUR SICHEREN SIGNALMANIPULATION FÜR DEN TEST INTEGRIERTER SICHERHEITSFUNKTIONALITÄTEN**
METHOD AND SYSTEM FOR SECURE SIGNAL MANIPULATION FOR TESTING INTEGRATED SECURITY FUNCTIONALITIES
PROCÉDÉ ET SYSTÈME DE MANIPULATION SÉCURISÉE DE SIGNAL POUR L'ESSAI DES FONCTIONNALITÉS DE SÉCURITÉ INTÉGRÉES

(30) Priorität: 11.03.2019 DE 102019203251
(43) Veröffentlichungstag der Anmeldung: 16.09.2020
(73) Patentinhaber: VOLKSWAGEN AG, 38440 Wolfsburg (DE)
(72) Erfinder: Dürkop, Henning, 38110 Braunschweig (DE); Neubauer, Marc, 38159 Vechelde GT Sierße (DE); Lorda Cobos, Alejandro, 38126 Braunschweig (DE)

(56) Entgegenhaltungen:
- WO-A1-2005/045538
- WO-A2-2015/058119
- SEO-HYUN JEON ET AL: "Automotive hardware development according to ISO 26262", ADVANCED COMMUNICATION TECHNOLOGY (ICACT), 2011 13TH INTERNATIONAL CONFERENCE ON, IEEE, 13. Februar 2011 (2011-02-13), Seiten 588-592, XP032013135, ISBN: 978-1-4244-8830-8

## Beschreibung

Die Erfindung betrifft ein Verfahren zur sicheren Signalmanipulation für den Test integrierter Sicherheitsfunktionalitäten. Zudem betrifft die Erfindung ein System zur sicheren Signalmanipulation für den Test integrierter Sicherheitsfunktionalitäten.

Nahezu alle in modernen Kraftfahrzeugen im Fahrbetrieb anfallenden Steuer- und Regelungsaufgaben werden unter Verwendung von software-basierten, zumeist elektronischen Fahrzeugkomponenten beziehungsweise -systemen ausgeführt. Beispielhaft für die Bandbreite der von diesen Komponenten oder Systemen im typischen Fahrbetrieb wahrgenommenen Aufgaben seien nur das automatische Abblenden bei Gegenverkehr einerseits und andererseits das hochautomatisierte Fahren mit mehreren Assistenzsystemen, bei dem die Überwachung des Fahrumfeldes unter vollständiger Kontrolle durch diese Systeme erfolgt, genannt.

Die Software trägt somit in modernen Kraftfahrzeugen nicht nur zur Komfortverbesserung für den Fahrer bei, sondern liefert auch einen wichtigen Beitrag zur Unfallvermeidung und zum Insassenschutz.

Mit den neuesten Entwicklungen, hin zum autonomem beziehungsweise fahrerlosen Fahren, geht insoweit nicht nur eine vermehrte Verwendung von software-basierten Komponenten in einem Kraftfahrzeug einher, mithin eine Zunahme des Kostenanteils derartiger Systeme an den Gesamtfahrzeugkosten. Tatsächlich ist diese Entwicklung insbesondere auch durch eine qualitative Weiterentwicklung der vorhandenen Software-Lösungen bestimmt, die sich allein schon aus der Zahl und Komplexität der bereits beim teilautonomen Fahren zu berücksichtigenden Probleme ergibt. Ob und inwieweit diese Probleme im realen Fahrbetrieb beherrschbar sind, ist somit wesentlich von einem fehlerfreien Zusammenwirken der jeweils beteiligten Assistenzsysteme und damit von der Fehlerfreiheit jeder einzelnen eingesetzten Komponenten-Software abhängig.

Insbesondere sind zudem Sicherheitsaspekte zu berücksichtigen, die einen unautorisierten Zugriff auf die eingesetzten Fahrzeugkomponenten möglichst zuverlässig zu verhindern imstande sind.

In modernen Kraftfahrzeugen muss damit nicht nur jede software-basierte Einzelkomponente per se hohe Anforderungen bezüglich ihrer Funktionssicherheit erfüllen. Die Forderung nach einer hohen Funktionssicherheit muss gleichermaßen zuverlässig von allen derartigen Komponenten im Systemverbund erfüllt werden.

Dies ist durch geeignete Funktionstests aller Fahrzeugkomponenten nachzuweisen. Dabei werden in bekannter Weise eine jeweils zu prüfende Software mit geeigneten Testsignalen beaufschlagt und die Systemantwort analysiert. Entsprechend der großen Zahl derartiger Systemkomponenten in einem modernen Kraftfahrzeug sind solche Tests nicht nur aufwendig, sie sind auch kostenintensiv.

Die Durchführung dieser Tests zur Verifikation und Validierung der Sicherheitsfunktionen ist etwa in der ISO-Norm 26262 für sicherheitsrelevante elektrische oder elektronische Systeme in Kraftfahrzeugen nach einem Mehr-Ebenen-Konzept (Ebene 1 - Systemebene, Ebene 2 - Hardwareebene, Ebene 3 - Softwareebene) geregelt. Danach ist jede Fehlfunktion im Hinblick auf Schweregrad (severity), Gefährdungsgrad (exposure) und Beherrschbarkeit (controllability) im Fahrbetrieb zu analysieren und einer von insgesamt fünf entsprechenden Gefährdungsstufen QM, ASIL A, ASIL B, ASIL C , ASIL D zuzuordnen, wobei ASIL D die höchste und QM die niedrigste Gefährdungsstufe bezeichnet (ASIL ― Automotive Safety Integrity Level, QM - Quality Management). Ausgehend davon sind dann die in der Norm im Einzelnen genannten Abhilfemaßnahmen vorzusehen.

Die Verifikation und Validierung von Sicherheitsfunktionen erfolgt bei Testkonzepten auf dieser Basis mittels einer gesonderten Software mit integrierter Signalmanipulation (Fehleraufschaltsoftware). Diese Fehleraufschaltsoftware provoziert dazu eine Fehlfunktion auf der Ebene 1 einer zu testenden Systemkomponente, um nachzuweisen, dass die Sicherheitsfunktion der Ebene 2 diese erkennt und eine entsprechende Maßnahme einleitet.

Üblicherweise erfolgt die Freigabe einer Systemkomponente unter Verwendung dieser speziellen Software, und damit für einen Softwarestand, der nicht dem Seriensoftwarestand entspricht, der eine entsprechende Freigabeempfehlung erhalten soll.

Die beiden genannten Softwarestände unterscheiden sich insoweit jedenfalls durch die zur Signalmanipulation zusätzlich eingebrachten Funktionalität. Da diese zusätzliche Softwarefunktionalität nicht gesondert überwacht wird, stellt sie ein potentielles Sicherheitsrisiko dar.

Nach dem Stand der Technik ist die Fehleraufschaltsoftware gewöhnlich in der Seriensoftware integriert, sodass eine Verifikation und Validierung der jeweiligen Sicherheitsfunktion auch im Serienprodukt jederzeit möglich sind. Um ein versehentliches Auslösen der Manipulationsfunktion im Fahrbetrieb zu verhindern, müssen dabei geeignete Schutzmaßnahmen bereitgestellt werden. Diese Schutzmaßnahmen sind unabhängig von der Art der verwendeten Testmethode bei der Verifikation und Validierung der Sicherheitsfunktion einer Systemkomponente erforderlich, und mithin nicht nur bei Tests nach der ISO-Norm 26262 mit dem bekannten Mehr-Ebenen-Konzept, sondern auch bei alternativen Tests, die mittels qualifizierter Werkzeuge, wie zum Beispiel SCADE mit zertifiziertem Compiler, entwickelt wurden.

Nicht sicherzustellen ist mit diesen Schutzmaßnahmen allerdings, dass während der zyklischen Ausführung der integrierten Fehleraufschaltsoftware keine unzulässigen Manipulationen vorgenommen werden können. Dagegen müssen zusätzliche Vorkehrungen getroffen werden.

Die in der Seriensoftware implementierte Fehleraufschaltfunktion erfordert zudem zusätzliche Ressourcen in Form von Speicherplatz und Laufzeit, die vorzuhalten sind.

Des Weiteren ist zu jedem Signal, welches für die unterschiedlichen Tests mit der in der Seriensoftware implementierten Fehleraufschaltfunktion manipuliert werden muss, ein entsprechender Eingriff vorzuhalten.

Sollen mit der in der Seriensoftware implementierten Fehleraufschaltfunktion Tests mit komplexeren Signalverläufen durchgeführt werden, müssen die entsprechenden Signalgeneratoren, etwa für rampenförmige Verläufe, Sinusfunktionen oder Dreiecksfunktionen, sowie Berechnungen abhängiger Größen, im Zielsystem hinterlegt werden. Darüber hinaus ist eine entsprechende Anzahl von Applikationsparametern für derartige Tests vorzuhalten, die verwaltet, getestet und dokumentiert werden müssen.

Bei jeder bestimmungsgemäßen Verwendung einer software-basierten Einzelkomponente mit implementierter Fehleraufschaltsoftware muss ein versehentliches Aktivieren der Fehleraufschaltfunktion im Fahrbetrieb zuverlässig verhindert werden. Dazu sind eine geeignete Grundbedatung und Dokumentation vorzusehen.

Auch kann es fallweise zum Zwecke einer Verringerung des Risikos einer Fehlbedienung und/oder des Know-how-Schutzes erforderlich sein, von der Fehleraufschaltsoftware erfasste Daten vor dem Nutzer einer software-basierten Einzelkomponente zu verbergen. Auch die hierfür zu treffenden Maßnahmen für eine Datenverriegelung unterliegen den Bestimmungen nach ISO-Norm 26262 und müssen in jedem Einzelfall berücksichtigt werden, um eine Gefährdung der funktionalen Sicherheit der jeweiligen Komponente auszuschließen.

Aus dem Stand der Technik sind verschiedene Verfahren bekannt, mit denen Sicherheitsfunktionen eines Fahrzeugs in Abhängigkeit von Steuersignalen überprüft werden können.

Beispielhaft hierfür sei DE 10 2012 215 343 A1 genannt. Danach wird anhand von Diagnosetests in zeitlichen Abständen wiederholt überprüft, ob in einem Kraftfahrzeugsystem eine Störung vorliegt, welche die Durchführung einer Sicherheitsfunktion beeinträchtigen kann. Unter Verwendung eines Kommunikationssystems und einer Steuereinheit wird aus den Testdaten ein Zuverlässigkeitswert für ein Erkennen einer Störung vor einer Beeinträchtigung der Sicherheitsfunktion ermittelt.

Aus DE 10 2017 202 347 A1 ist ein Verfahren bekannt, mit dem die Funktionssicherheit während des Betriebs eines Fahrzeugs anhand eines Datenaustausches zwischen zwei Steuergeräten und einer Veränderung von Steuersignalen durch ein drittes Steuergerät getestet werden kann. Das Testen von Signaländerungen erfolgt hierbei auf Systemebene zwischen den Steuergeräten.

Ein Verfahren zum Manipulieren eines Speicherzugriffs durch eine Speichermanipulations-Programmkomponente, welches über ein Steuergeräteprogramm einer Steuergeräteeinheit in einem Fahrzeug durchgeführt wird, ist in EP 2 759 939 B1 angegeben.

Aus WO 2005/045538 A1 sind ein Verfahren und eine Vorrichtung zur Stimulation von Funktionen zur Steuerung von Betriebsabläufen bekannt, wobei die Funktionen auf wenigstens eine globale Variable wenigstens eines Programms zur Steuerung zurückgreifen. Dabei ist wenigstens eine Stimulationsfunktion vorgesehen, die auf die wenigstens eine globale Variable über wenigstens einen Softwarefreischnitt zugreift.

Mit der vorliegenden Erfindung soll ein Verfahren zur sicheren Signalmanipulation für den Test integrierter Sicherheitsfunktionalitäten bereitgestellt werden, das geeignet ist, die Nachteile des Standes der Technik zu überwinden und insbesondere eine effiziente, komplexe, flexible und kostengünstige Signalmanipulation bei software-basierten Fahrzeugkomponenten zu ermöglichen, bei gleichzeitiger Verbesserung der funktionalen Sicherheit derselben.

Die erfindungsgemäße Aufgabe wird durch den Gegenstand der unabhängigen Patentansprüche gelöst. Bevorzugte Weiterbildungen sind Gegenstand der Unteransprüche.

Ein erster Aspekt der vorliegenden Erfindung betrifft ein Verfahren zur sicheren Signalmanipulation für den Test integrierter Sicherheitsfunktionalitäten einer software-basierten Kraftfahrzeugkomponente in einem Kraftfahrzeug, welches die im Folgenden beschriebenen Verfahrensschritte aufweist.

In einem ersten Schritt wird verfahrensgemäß eine software-basierte Komponente eines Kraftfahrzeugs für eine sicherheitstechnische Analyse einer von dieser umfassten Sicherheitsfunktion ausgewählt. Sicherheitsfunktionen von Kraftfahrzeugkomponenten sind üblicherweise normiert. Nach ISO-Norm 26262 werden vier Gefährdungspotentiale, ASIL A bis ASIL D, bei elektrischen, elektronischen und programmierbaren Kraftfahrzeugkomponenten unterschieden, zu deren Kontrolle entsprechende Sicherheitsfunktionen vorzusehen sind. Eine Sicherheitsfunktion überwacht dazu ein vom Kraftfahrzeug erzeugtes Steuersignal, das an einem Eingang der software-basierten Kraftfahrzeugkomponente als Eingangssignal anliegt. Für einen Test der in einer Kraftfahrzeugkomponente integrierten Sicherheitsfunktionalitäten werden daher zunächst alle relevanten Eingangs- und Ausgangssignale identifiziert.

In einem zweiten Schritt wird dann ein geeignetes Testsignal bestimmt. Dazu wird das zuvor identifizierte Eingangssignal in einer Weise modifiziert, dass es eine Fehlfunktion der Kraftfahrzeugkomponente provozieren kann. Auf diese Weise wird mit allen Signalen verfahren, die im Vorfeld einer sicherheitstechnischen Analyse für eine Signalmanipulation bestimmt wurden.

In einem dritten Schritt wird eine externe Signalmanipulationseinheit für Verifikations- und Validierungstests der Sicherheitsfunktion der software-basierten Kraftfahrzeugkomponente bereitgestellt. Mit dieser wird wenigstens ein vorher bestimmtes Testsignal erzeugt und zur Einspeisung in die zu testende Kraftfahrzeugkomponente bereitgestellt. Indem die externe Signalmanipulationseinheit für die Kontrolle der Sicherheitsfunktion der ausgewählten Kraftfahrzeugkomponente unabhängig vom Kraftfahrzeug und ohne Einbeziehung einer, in der Kraftfahrzeugkomponente abgelegten, Testroutine betrieben wird, kann die Kontrolle der integrierten Sicherheitsfunktionalitäten durch eine sichere Signalmanipulation in einem QM-Kontext nach der ISO-Norm 26262 erfolgen. Das heißt, die erfindungsgemäße Signalmanipulation benutzt keine internen Mechanismen der Kraftfahrzeugkomponente, sondern erfolgt extern über ein geeignetes Werkzeug (zum Beispiel PC-Tool mit Software).

Bei einer Nutzung von standardisierten XCP-Diensten zur Signalmanipulation mit der externen Signalmanipulationseinheit sind keine besonderen Sicherungsmechanismen im Protokoll vorgesehen, da diese Dienste vornehmlich zum Zwecke der Entwicklung von Funktionsprototypen vorgesehen sind.

In einem vierten Schritt wird die Verbindung der software-basierten Kraftfahrzeugkomponente mit dem Kraftfahrzeug unterbrochen und eine Verbindung mit der externen Signalmanipulationseinheit hergestellt. Dazu wird in den Eingang der software-basierten Kraftfahrzeugkomponente anstelle des vom Kraftfahrzeug erzeugten Steuersignals, das zunächst als Eingangssignal anliegt, das von der externen Signalmanipulationseinheit erzeugte Testsignal eingespeist.

In einem fünften Schritt werden die Verifikations- und Validierungstests der Sicherheitsfunktion an dem oder an den Eingängen der software-basierten Kraftfahrzeugkomponente durchgeführt. Dazu wird die zu testende Kraftfahrzeugkomponente mit dem am Eingang anliegenden wenigstens einen Testsignal betrieben und das entsprechende, von der Kraftfahrzeugkomponente erzeugte, am Ausgang anliegende Ausgangssignal von der externen Signalmanipulationseinheit erfasst. Signalisiert das hierbei auftretende Ausgangssignal einen sicheren Zustand der getesteten Kraftfahrzeugkomponente, ist der Nachweis der Funktionsfähigkeit der in der Kraftfahrzeugkomponente integrierten Sicherheitsfunktionalität erbracht.

Dadurch, dass die für die Signalmanipulation erforderlichen Berechnungen in der externen Signalmanipulationseinheit - und damit außerhalb des DUT (Device Under Test) - erfolgen, können diese deutlich komplexer ausfallen und sind flexibler in der Gestaltung.

Da sich die Signalmanipulation nicht im Serienprodukt befindet, kann diese auch kein Fehlverhalten im Kraftfahrzeug auslösen; die per Signalmanipulation zu prüfende Software entspricht der Seriensoftware. Ein Spezial-Softwarestand für Testzwecke erübrigt sich daher.

In einem sechsten Schritt werden die mit der externen Signalmanipulationseinheit außerhalb der software-basierten Kraftfahrzeugkomponente durchgeführten Verifikations- und Validierungstests überprüft. Dazu wird das Ausgangssignal der Kraftfahrzeugkomponente mittels eines von der externen Signalmanipulationseinheit bereitgestellten dritten Testsignals, das durch Abwandlung eines von der Kraftfahrzeugkomponente erzeugten Ausgangssignals gewonnen wird, simuliert.

Da der Testvorgang in der Regel zeitlich nach der Entwicklung der in einer Kraftfahrzeugkomponente implementierten Funktionen stattfindet, kommt es während der Erstellung und Durchführung der Verifikations- und Validierungstests häufig zu notwendigen Anpassungen bei der Testanregung und Auswertung. Bei der externen Stimulation erfordern diese Anpassungen keinen erneuten Eingriff in die zu prüfende Funktion. Eine erneute Freigabe der Funktion wird somit vermieden.

In einem siebten Schritt wird das nach dem zweiten Verfahrensschritt erhaltene Testsignal angepasst, um ein eventuell noch nicht den Vorgaben entsprechendes Ausgangsverhalten der Kraftfahrzeugkomponente sicherzustellen. Dazu werden das wenigstens eine erste und das dritte Testsignal der externen Signalmanipulationseinheit im Hinblick auf das jeweilige Ausgangssollverhalten hin modifiziert. Mit den modifizierten Testsignalen werden dann die Verifikations- und Validierungstests erneut durchgeführt. Diese Schritte werden gegebenenfalls sooft wiederholt, bis das jeweilige Ausgangssignal der Kraftfahrzeugkomponente dem jeweils vorgegebenen Sollausgangssignal entspricht.

In einem achten Schritt wird schließlich die geprüfte Sicherheitsfunktion der getesteten Kraftfahrzeugkomponente freigeschaltet. Dazu wird die elektrische Verbindung der externen Signalmanipulationseinheit mit der Kraftfahrzeugkomponente unterbrochen und über deren Eingang beziehungsweise Ausgang die ursprüngliche Verbindung mit dem Kraftfahrzeug wiederhergestellt.

Das erfindungsgemäße Verfahren ist somit zur Verwendung in allen Steuergeräteprojekten geeignet, unabhängig von einer Einstufung der funktionalen Sicherheit.

Ein weiterer Aspekt der vorliegenden Erfindung betrifft ein System zur sicheren Signalmanipulation für den Test integrierter Sicherheitsfunktionalitäten gemäß dem erfindungsgemäßen Verfahren.

Das System umfasst eine software-basierte Kraftfahrzeugkomponente der Gefährdungsstufe ASIL A bis ASIL D nach der ISO-Norm 26262 in einem Kraftfahrzeug mit wenigstens einem Eingang und einem Ausgang.

Daneben umfasst das erfindungsgemäße System eine externe Signalmanipulationseinheit für Verifikations- und Validierungstests der Sicherheitsfunktion der software-basierten Kraftfahrzeugkomponente in einem QM-Kontext nach der ISO-Norm 26262. Die externe Signalmanipulationseinheit ermöglicht ein Erzeugen von Testsignalen ausgehend von Steuersignalen des Kraftfahrzeugs, die betriebsbedingt an einem Eingang beziehungsweise an den Eingängen der Kraftfahrzeugkomponente anliegen, und ein Bereitstellen eines Ausgangstestsignals der Kraftfahrzeugkomponente. Hierzu bietet sich die Verwendung bestehender Softwarelösungen an.

Die externe Signalmanipulationseinheit weist dazu wenigstens einen ersten und einen zweiten Statuswechselschalter auf, der jeweils ein wechselweises Hin- und Herschalten zwischen einer jeweils ersten und zweiten Schalterstellung ermöglicht.

Der wenigstens eine erste Statuswechselschalter ist in seiner ersten Stellung zum Herstellen einer Verbindung zwischen dem Eingang der software-basierten Kraftfahrzeugkomponente und der externen Signalmanipulationseinheit ausgebildet, während der zweite Statuswechselschalter in seiner ersten Stellung zum Herstellen einer Verbindung zwischen dem Ausgang der Kraftfahrzeugkomponente und der externen Signalmanipulationseinheit vorgesehen ist. Die jeweilige Verbindung umfasst eine logische Verknüpfung in der Software der Kraftfahrzeugkomponente.

In seiner zweiten Stellung ist jeder erste Statuswechselschalter zum Herstellen einer Verbindung zwischen wenigstens einem Eingang der Kraftfahrzeugkomponente und dem Kraftfahrzeug ausgebildet. Der zweite Statuswechselschalter ist in seiner zweiten Stellung zum Herstellen einer Verbindung zwischen dem Ausgang der Kraftfahrzeugkomponente und dem Kraftfahrzeug vorgesehen.

Mittels des wenigstens einen ersten Statuswechselschalters ist die externe Signalmanipulationseinheit zum Bereitstellen der erzeugten Testsignale an dem Eingang oder den Eingängen der software-basierten Kraftfahrzeugkomponente geeignet. Die externe Signalmanipulationseinheit ermöglicht zudem ein Bereitstellen von erzeugten Testsignalen am zweiten Statuswechselschalter beziehungsweise am Ausgang der Kraftfahrzeugkomponente.

Die externe Signalmanipulationseinheit umfasst zudem einen Speicher und einen Controller. Der Speicher ermöglicht ein Bereitstellen der beim Test der in der Kraftfahrzeugkomponente integrierten Sicherheitsfunktionalitäten anfallenden Daten für eine Auswertung durch den Controller. Damit umfasst die externe Signalmanipulationseinheit alle erforderlichen Komponenten zur sicheren Signalmanipulation für den Test integrierter Sicherheitsfunktionalitäten einer software-basierten Kraftfahrzeugkomponente außerhalb derselben und unabhängig von dem Kraftfahrzeug.

Weitere bevorzugte Ausgestaltungen der Erfindung ergeben sich aus den übrigen, in den Unteransprüchen genannten Merkmalen.

In einer bevorzugter Ausgestaltung des erfindungsgemäßen Verfahrens werden die Verifikations- und Validierungstests im fünften Verfahrensschritt unter Nutzung von XCP-STIM Diensten anhand einer zeitsynchronen Manipulation über den Fahrzeugbus oder einen Adapter zur Debug-Schnittstelle (POD, Plug-On-Device) durchgeführt.

Die Nutzung von XCP-STIM Diensten ermöglicht die zeitsynchrone Manipulation über den Fahrzeugbus oder eine zusätzliche Hardware (Plug-On-Device POD). Durch den direkten Zugriff auf den Controller über ein POD sind auch die geringen Zykluszeiten von Reglungsfunktionen erreichbar. Bei einer Mehrprozessorarchitektur ist zudem jeder Prozessor (CPU) individuell erreichbar.

In einer Mehrprozessor-Architektur ist das synchrone Stimulieren per XCP automatisch dann gegeben, wenn auch das synchrone Messen implementiert wurde. Das synchrone Messen darf als Grundvoraussetzung für eine sicherheitsgerichtete Anwendung mit mehreren Prozessoren vorausgesetzt werden.

Nach einer weiteren bevorzugten Durchführungsform des erfindungsgemäßen Verfahrens ist vorgesehen, dass die zeitsynchrone Manipulation auch für ein Rapid Prototyping einer Sicherheitsfunktion der software-basierten Kraftfahrzeugkomponente verwendet wird.

In einer bevorzugten Ausführungsform des erfindungsgemäßen Systems ist vorgesehen, dass die externe Signalmanipulationseinheit einen Computer mit einer Signalmanipulationssoftware umfasst.

Die verschiedenen, in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen weitergehend erläutert. Es zeigen:
- Figur 1: eine schematische Darstellung der Verfahrensschritte bei einem Verfahren zur sicheren Signalmanipulation für den Test integrierter Sicherheitsfunktionalitäten gemäß der Erfindung;
- Figur 2: ein System zur sicheren Signalmanipulation für den Test integrierter Sicherheitsfunktionalitäten nach dem Verfahren nach Figur 1;
- Figur 3: das Zusammenwirken einzelner Komponenten einer externen Signalmanipulationseinheit 21 zur sicheren Signalmanipulation für den Test integrierter Sicherheitsfunktionalitäten einer Kraftfahrzeugkomponente 12 im QM-Kontext 2 in einer bevorzugten Ausführungsform des erfindungsgemäßen Systems nach Figur 2.

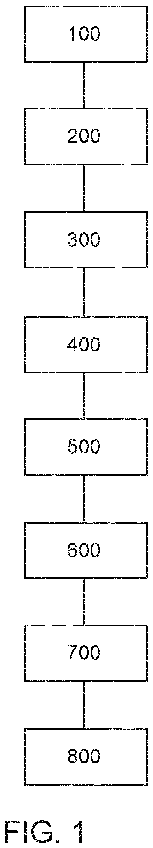

Figur 1 zeigt in schematischer Darstellung die einzelnen Schritte eines Verfahrens zur sicheren Signalmanipulation für den Test integrierter Sicherheitsfunktionalitäten gemäß der Erfindung.

In einem ersten Verfahrensschritt 100 wird ein Eingangssignal V' an einem ersten Eingang 121 einer, mit einer Gefährdungsstufe ASIL D nach der ISO-Norm 26262 bewerteten, software-basierten Kraftfahrzeugkomponente 12 für eine sicherheitstechnische Analyse einer Sicherheitsfunktion der Kraftfahrzeugkomponente 12 ausgewählt. Das erste Eingangssignal V' entspricht hierbei einem von dem Kraftfahrzeug 11 erzeugten ersten Steuersignal V.

In einem zweiten Verfahrensschritt 200 wird ein erstes Testsignal W1 bestimmt. Dazu wird das erste Eingangssignal V' so geändert, dass es in der Kraftfahrzeugkomponente 12 eine Fehlfunktion auszulösen vermag.

In einem dritten Verfahrensschritt 300 wird eine externe Signalmanipulationseinheit 21 bereitgestellt, wobei diese geeignet ist, das im zweiten Verfahrensschritt bestimmte erste Testsignal W1 zum Zwecke eines Verifikations- und Validierungstests der Sicherheitsfunktion der Kraftfahrzeugkomponente 12 in einem QM-Kontext 2 nach der ISO-Norm 26262 bereitzustellen.

Um dieses erste Testsignal W1 in einem vierten Verfahrensschritt 400 in den Eingang 121 der Kraftfahrzeugkomponente 12 anstelle des ersten Eingangssignals V' einzuspeisen, wird die Verbindung der Kraftfahrzeugkomponente 12 mit dem Kraftfahrzeug 11 unterbrochen und stattdessen eine entsprechende Verbindung mit der Signalmanipulationseinheit 21 hergestellt.

In einem fünften Verfahrensschritt 500 wird ein Verifikations- und Validierungstest der Sicherheitsfunktion der Kraftfahrzeugkomponente 12 mittels des ersten Testsignals W1 unter Nutzung von standardisierten XCP-Diensten durchgeführt. Gleichzeitig wird mit der externen Signalmanipulationseinheit 21 ein sich daraus ergebendes Ausgangssignal F' an einem Ausgang 122 der Kraftfahrzeugkomponente 12 erfasst.

Anschließend wird in einem sechsten Verfahrensschritt 600 mit der externen Signalmanipulationseinheit 21 außerhalb der Kraftfahrzeugkomponente 12 überprüft, ob beziehungsweise inwieweit das bei dem Verifikations- und Validierungstest erzielte Ergebnis den Vorgaben entspricht. Dazu wird das Ausgangssignal der Kraftfahrzeugkomponente durch ein drittes Testsignal W3 der externen Signalmanipulationseinheit 21 simuliert.

Im Falle einer dabei festgestellten Abweichung des Ausgangsverhaltens vom jeweiligen Sollausgangsverhalten werden in einem siebten Verfahrensschritt 700 das erste und das dritte Testsignal W1, W3 mit der externen Signalmanipulationseinheit 21 modifiziert. Mit diesen modifizierten Testsignalen W1, W3 werden der fünfte und sechste Verfahrensschritt 500, 600 wiederholt. Der Vergleich der dabei am Ausgang der Kraftfahrzeugkomponente 12 auftretenden Ausgangssignale F' mit den Sollausgangssignalen F gibt wiederum Auskunft über die Wirksamkeit der in der Kraftfahrzeugkomponente 12 integrierten Sicherheitsfunktionalität. Dieser siebte Verfahrensschritt 700 wird solange mit einem jeweils modifizierten Testsignal W1, W3 wiederholt, bis die Wirksamkeit der Sicherheitsfunktionalität feststeht.

Ist dies der Fall, wird in einem achten Verfahrensschritt 800 die geprüfte Sicherheitsfunktion freigeschaltet. Dazu wird die elektrische Verbindung zwischen der Signalmanipulationseinheit 21 und der Kraftfahrzeugkomponente 12 unterbrochen und die Verbindung zwischen dem Kraftfahrzeug 11 und der Kraftfahrzeugkomponente 12 jeweils über deren Eingang 121 und Ausgang 122 wiederhergestellt.

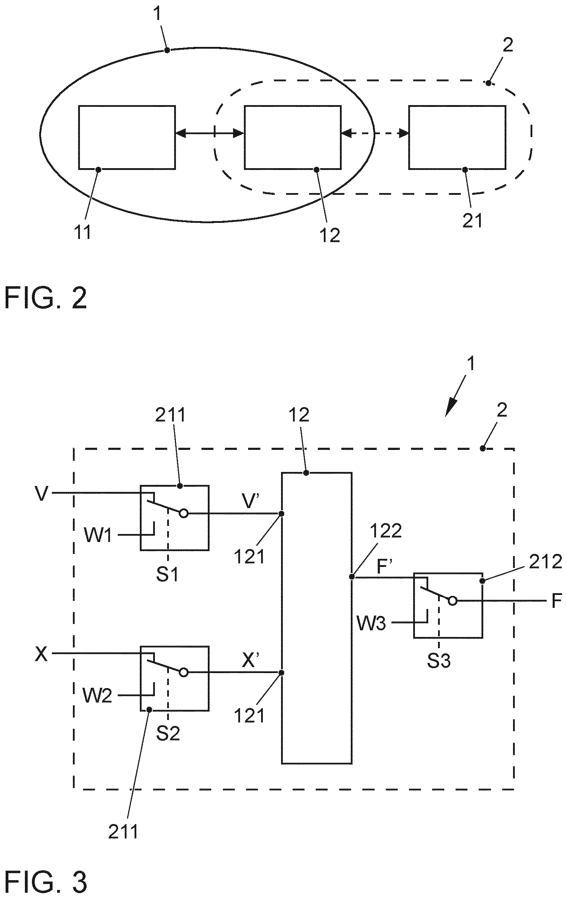

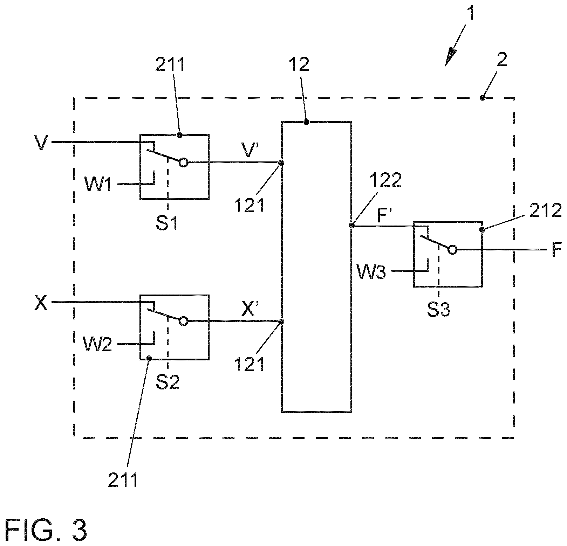

In Figur 2 ist ein System zur Anwendung des Verfahrens zur sicheren Signalmanipulation für den Test integrierter Sicherheitsfunktionalitäten nach der Erfindung dargestellt. Dieses wird gebildet durch ein Kraftfahrzeug 11, eine zu testende Kraftfahrzeugkomponente 12 und eine externe Signalmanipulationseinheit 21. Nach den Vorgaben der ISO-Norm 26262 ist für eine Risikobetrachtung des Kraftfahrzeugs 11 mit der Kraftfahrzeugkomponente 12 ein ASIL-D-Kontext 1 anzunehmen, während für die Testumgebung, umfassend die Kraftfahrzeugkomponente 12 und die externe Signalmanipulationseinheit 21 ein QM-Kontext 2 anzunehmen ist.

Figur 3 zeigt ein erfindungsgemäßes Testumfeld im QM-Kontext 2 mit einer zu testenden Kraftfahrzeugkomponente 12. Der QM-Kontext 2 bildet hierbei einen geschützten Bereich mit einem eigenen Speicher, der von einer externen Signalmanipulationseinheit 21 umfasst ist. Diese wird hierbei durch zwei erste Statuswechselschalter 211 zum Einspeisen eines ersten und zweiten Testsignals W1, W2 in die Kraftfahrzeugkomponente 12 über die Eingänge 121, und einen zweiten Statuswechselschalter 212 zum Bereitstellen eines dritten Testsignals W3 als Ausgangssignal der Kraftfahrzeugkomponente 12 repräsentiert.

Jeder Statuswechselschalter 211, 212 ist zum wechselweisen Hin- und Herschalten zwischen einer ersten und einer zweiten Stellung mittels jeweils eines Statussteuersignals S1, S2, S3 ausgebildet.

Die beiden ersten Statuswechselschalter 211 befinden sich in einer jeweils ersten Stellung und speisen in dieser ein erstes und ein zweites Steuersignal V, X des Kraftfahrzeugs 11 als erstes und zweites Eingangssignal V', X' in die beiden Eingänge 121 der Kraftfahrzeugkomponente 12 ein. Das von der externen Signalmanipulationseinheit 21 bereitgestellte erste und zweite Testsignal W1, W2 liegt an dem ersten beziehungsweise zweiten Statuswechselschalter 211, 212 zum alternativen Einspeisen in die beiden ersten Eingänge 121 der Kraftfahrzeugkomponente 12 bereit. Der zweite Statuswechselschalter 212 befindet sich ebenfalls in seiner ersten Stellung und verbindet in dieser den Ausgang 122 der Kraftfahrzeugkomponente 12 mit dem Kraftfahrzeug 11. Damit ist die Kraftfahrzeugkomponente 12 in ihrem regulären Betriebszustand im Kraftfahrzeug 11 dargestellt.

Zur sicheren Signalmanipulation für den Test der in der Kraftfahrzeugkomponente 12 integrierten Sicherheitsfunktionalitäten kann somit jeder Statuswechselschalter 211, 212 mittels jeweils eines Statussteuersignals S1, S2, S3 in seine zweite Stellung gebracht werden, sodass jedes von der externen Signalmanipulationseinheit 21 bereitgestellte Testsignal W1, W2, W3 im QM-Kontext 2 einem der beiden Eingänge 121 beziehungsweise dem Ausgang 122 der Kraftfahrzeugkomponente 12 zugeführt werden kann.

Dieses Testumfeld ermöglicht es zudem, in vorteilhafter Weise Sicherungsmaßnahmen vorzusehen. So kann die Signalfreischaltung mittels der Statussteuersignale S1, S2, S3 jeweils durch einen Timer zeitlich begrenzt werden. Auch erfordert das zu manipulierende Signal eine explizite Freischaltung. Weitere Sicherungsmaßnahmen ergeben sich aus einer Berücksichtigung des Memory Context und daraus, dass pro Kontext ein eigenes XCP Event definiert ist. Analog zur Sicherheitsarchitektur der Kraftfahrzeugkomponente werden Querbeeinflussungen auf Bereiche der Software, die in einem bestimmten Testschritt nicht geprüft werden, vermieden. Schließlich können Security Mechanismen, wie beispielsweise Signaturen, zusätzlich verwendet werden.

### Bezugszeichenliste

- 1: ASIL-D-Kontext (ISO-Norm 26262)
- 11: Kraftfahrzeug
- 12: Kraftfahrzeugkomponente / DUT (device under test) / Funktion
- 121: Eingang
- 122: Ausgang
- 2: QM-Kontext (ISO-Norm 26262)
- 21: externe Signalmanipulationseinheit
- 211: erster Statuswechselschalter
- 212: zweiter Statuswechselschalter

- 100: erster Verfahrensschritt
- 200: zweiter Verfahrensschritt
- 300: dritter Verfahrensschritt
- 400: vierter Verfahrensschritt
- 500: fünfter Verfahrensschritt
- 600: sechster Verfahrensschritt
- 700: siebter Verfahrensschritt
- 800: achter Verfahrensschritt

- F: Sollausgangssignal
- F': Ausgangssignal
- S1: erstes Statussteuersignal
- S2: zweites Statussteuersignal
- S3: drittes Statussteuersignal
- V: erstes Steuersignal
- V': erstes Eingangssignal
- W1: erstes Testsignal
- W2: zweites Testsignal
- W3: drittes Testsignal
- X: zweites Steuersignal
- X': zweites Eingangssignal

## Patentansprüche

1. Verfahren zur sicheren Signalmanipulation für den Test integrierter Sicherheitsfunktionalitäten einer software-basierten Kraftfahrzeugkomponente (12) in einem Kraftfahrzeug (11), **gekennzeichnet durch** die Schritte:
Auswählen (100) wenigstens eines ersten, an einem Eingang (121) einer mit einer Gefährdungsstufe ASIL A bis ASIL D nach der ISO-Norm 26262 bewerteten software-basierten Kraftfahrzeugkomponente (12) anliegenden Eingangssignals (V') für eine sicherheitstechnische Analyse einer Sicherheitsfunktion der Kraftfahrzeugkomponente (12), wobei das an dem Eingang (121) anliegende erste Eingangssignal (V') einem, von dem Kraftfahrzeug (11) erzeugten, ersten Steuersignal (V) entspricht;
Bestimmen (200) wenigstens eines ersten Testsignals (W1) durch Ändern des ausgewählten wenigstens einen ersten Eingangssignals (V');
Bereitstellen (300) einer externen Signalmanipulationseinheit (21) für Verifikations- und Validierungstests der Sicherheitsfunktion der Kraftfahrzeugkomponente (12) mittels des bestimmten, wenigstens einen ersten Testsignals (W1) in einem QM-Kontext (2);
Unterbrechen (400) der Verbindung der Kraftfahrzeugkomponente (12) mit dem Kraftfahrzeug (11) und Herstellen einer Verbindung mit der Signalmanipulationseinheit (21), sodass an dem Eingang (121) der Kraftfahrzeugkomponente (12) anstelle des ersten Eingangssignals (V') das erste Testsignal (W1) anliegt;
Durchführen (500) der Verifikations- und Validierungstests der Sicherheitsfunktion der Kraftfahrzeugkomponente (12) mittels des wenigstens einen ersten Testsignals (W1) unter Nutzung von standardisierten XCP-Diensten, wobei das an einem Ausgang (122) der Kraftfahrzeugkomponente (12) jeweils anliegende Ausgangssignal (F') von der Signalmanipulationseinheit (21) erfasst wird;
Überprüfen (600) der mit der Signalmanipulationseinheit (21) außerhalb der Kraftfahrzeugkomponente (12) durchgeführten Verifikations- und Validierungstests mittels eines, von der Signalmanipulationseinheit (21) bereitgestellten, dritten Testsignals (W3) und einem Sollausgangssignal (F) der Kraftfahrzeugkomponente (12);
Anpassen (700) des wenigstens einen ersten und dritten Testsignals (W1, W3) durch eine weitere externe Signalmanipulation des jeweils ausgewählten Signals (V, F) und Wiederholen der Schritte (500) und (600) mit den manipulierten Testsignalen (W1, W3), falls erforderlich solange, bis das jeweilige Ausgangssignal (F') dem Sollausgangssignal (F) entspricht;
Freischalten (800) der geprüften Sicherheitsfunktion durch Unterbrechen der Verbindung der Signalmanipulationseinheit (21) mit der Kraftfahrzeugkomponente (12) und Wiederherstellen der Verbindung der Kraftfahrzeugkomponente (12) mit dem Kraftfahrzeug (11) über den zumindest einen Eingang (121) und den Ausgang (122) der Kraftfahrzeugkomponente (12).

2. Verfahren nach Anspruch 1, wobei das Durchführen (500) der Verifikations- und Validierungstests unter Nutzung von XCP-STIM Diensten anhand einer zeitsynchronen Manipulation über den Fahrzeugbus oder einen Adapter zur Debug-Schnittstelle (POD, Plug-On-Device) erfolgt.

3. Verfahren nach Anspruch 2, wobei die zeitsynchrone Manipulation für Rapid Prototyping einer Sicherheitsfunktion der Kraftfahrzeugkomponente (12) verwendet wird.

4. System zum Durchführen eines Verfahrens gemäß Anspruch 1, aufweisend
in einem Kraftfahrzeug (11), eine mit einer Gefährdungsstufe ASIL A bis ASIL D nach der ISO-Norm 26262 bewertete software-basierte Kraftfahrzeugkomponente (12) mit wenigstens einem Eingang (121) und einem Ausgang (122),
**dadurch gekennzeichnet, dass** das System zudem aufweist:
eine externe Signalmanipulationseinheit (21) für Verifikations- und Validierungstests der Sicherheitsfunktion der Kraftfahrzeugkomponente (12) in einem QM-Kontext (2) nach der ISO-Norm 26262 mittels Manipulation eines an dem Eingang (121) anliegenden, einem ersten, von dem Kraftfahrzeug (11) erzeugten Steuersignal (V) entsprechenden, ersten Eingangssignals (V'), wobei
die Signalmanipulationseinheit (21) wenigstens einen ersten und einen zweiten Statuswechselschalter (211, 212) zum Steuern eines wechselweisen Hin- und Herschaltens zwischen einer ersten und einer zweiten Stellung mittels jeweils eines Statussteuersignals (S1, S2, S3) umfasst, wobei
der wenigstens eine erste Statuswechselschalter (211) in seiner ersten Stellung zum Herstellen einer elektrischen Verbindung mit dem Eingang (121) und der zweite Statuswechselschalter (212) in seiner ersten Stellung zum Herstellen einer elektrischen Verbindung mit dem Ausgang (122) der Kraftfahrzeugkomponente (12) mit der Signalmanipulationseinheit (21), und jeder erste Statuswechselschalter (211) in seiner zweiten Stellung zum Herstellen einer elektrischen Verbindung des wenigstens einen ersten Eingangs (121), und der zweite Statuswechselschalter (212) in seiner zweiten Stellung zum Herstellen einer elektrischen Verbindung des Ausgangs (122) der Kraftfahrzeugkomponente (12) mit dem Kraftfahrzeug (11) ausgebildet ist, wobei
die Signalmanipulationseinheit (21) zum Erzeugen von Testsignalen (W1, W2) und deren Bereitstellung an dem wenigstens einen Eingang (121) der Kraftfahrzeugkomponente (12) über den wenigstens einen ersten Statuswechselschalter (211) und zum Erzeugen eines Testsignals (W3) und dessen Bereitstellung an dem an dem zweiten Statuswechselschalter (212) ausgebildet ist, und wobei
die Signalmanipulationseinheit (21) einen Speicher zum Speichern und einen Controller zum Auswerten von, mit der Signalmanipulationseinheit (21) durchgeführten Verifikations- und Validierungstest außerhalb der Kraftfahrzeugkomponente (12) entstehenden, Daten umfasst.

5. System nach Anspruch 4, wobei die externe Signalmanipulationseinheit 21 einen Computer mit einer Signalmanipulationssoftware umfasst.

## Claims

1. Method for secure signal manipulation for testing integrated safety functionalities of a software-based motor vehicle component (12) in a motor vehicle (11), **characterized by** the steps of:
selecting (100) at least one first input signal (V') present at an input (121) of a software-based motor vehicle component (12) evaluated with a risk level of ASIL A to ASIL D according to ISO standard 26262 for a safety analysis of a safety function of the motor vehicle component (12), wherein the first input signal (V') present at the input (121) corresponds to a first control signal (V) generated by the motor vehicle (11);
determining (200) at least one first test signal (W1) by changing the selected at least one first input signal (V');
providing (300) an external signal manipulation unit (21) for verification and validation tests of the safety function of the motor vehicle component (12) by means of the determined, at least one, first test signal (W1) in a QM context (2);
interrupting (400) the connection of the motor vehicle component (12) to the motor vehicle (11), and establishing a connection with the signal manipulation unit (21), so that the first test signal (W1) is present at the input (121) of the motor vehicle component (12) instead of the first input signal (V');
performing (500) the verification and validation tests of the safety function of the motor vehicle component (12) by means of the at least one first test signal (W1) using standardized XCP services, wherein the output signal (F') respectively present at an output (122) of the motor vehicle component (12) is detected by the signal manipulation unit (21);
checking (600) the verification and validation tests performed with the signal manipulation unit (21) outside of the motor vehicle component (12), by means of a third test signal (W3) provided by the signal manipulation unit (21) and a target output signal (F) of the motor vehicle component (12);
adapting (700) the at least one first and third test signal (W1, W3) by means of a further external signal manipulation of the respectively selected signal (V, F), and repeating steps (500) and (600) with the manipulated test signals (W1, W3) if necessary until the respective output signal (F') corresponds to the target output signal (F);
clearing (800) the tested safety function by interrupting the connection of the signal manipulation unit (21) to the motor vehicle component (12) and restoring the connection of the motor vehicle component (12) to the motor vehicle (11) via the at least one input (121) and the output (122) of the motor vehicle component (12).

2. Method according to Claim 1, wherein the performance (500) of the verification and validation tests using XCP-STIM services takes place on the basis of a time-synchronous manipulation via the vehicle bus or an adapter for the debugging interface (POD, plug-on device).

3. Method according to Claim 2, wherein the time-synchronous manipulation is used for rapid prototyping of a safety function of the motor vehicle component (12).

4. System for performing a method according to Claim 1, comprising,
in a motor vehicle (11), a software-based motor vehicle component (12) with at least one input (121) and one output (122), said software-based motor vehicle component being evaluated with a risk level of ASIL A to ASIL D according to ISO standard 26262,
**characterized in that** the system additionally comprises:
an external signal manipulation unit (21) for verification and validation tests of the safety function of the motor vehicle component (12) in a QM context (2) according to ISO standard 26262, by means of manipulation of a first input signal (V') which is present at the input (121) and corresponds to a first input signal (V') generated by the motor vehicle (11), wherein
the signal manipulation unit (21) comprises at least a first and a second status change switch (211, 212) for controlling an alternating toggling between a first and a second position by means of a respective status control signal (S1, S2, S3), wherein
the at least one first status change switch (211), in its first position, is designed to establish an electrical connection with the signal manipulation unit (21) with the input (121), and the second status change switch (212), in its first position, is designed to establish an electrical connection with the signal manipulation unit (21) with the output (122) of the motor vehicle component (12), and each first status change switch (211) is designed in its second position to establish an electrical connection of the at least one first input (121) to the motor vehicle (11), and the second status change switch (212) is designed in its second position to establish an electrical connection of the output (122) of the motor vehicle component (12) to the motor vehicle (11), wherein
the signal manipulation unit (21) is designed to generate test signals (W1, W2) and supply them to the at least one input (121) of the motor vehicle component (12) via the at least one first status change switch (211), and to generate a test signal (W3) and supply it to the to the second status change switch (212), and wherein
the signal manipulation unit (21) comprises a memory for storage and a controller for the evaluation of data resulting from verification and validation testing performed with the signal manipulation unit (21) outside of the motor vehicle component (12).

5. System according to Claim 4, wherein the external signal manipulation unit 21 comprises a computer with signal manipulation software.

## Revendications

1. Procédé de manipulation sécurisée de signal pour l'essai des fonctionnalités de sécurité intégrées d'un composant de véhicule automobile (12) basé sur un logiciel dans un véhicule automobile (11), **caractérisé par** les étapes :
de sélection (100) d'au moins un premier signal d'entrée (V') présent au niveau d'une entrée (121) d'un composant de véhicule automobile (12) basé sur un logiciel évalué avec un niveau de danger ASIL A à ASIL D selon la norme ISO 26262 pour une analyse de technique de sécurité d'une fonction de sécurité du composant de véhicule automobile (12), dans lequel le premier signal d'entrée (V') présent au niveau de l'entrée (121) correspond à un premier signal de commande (V) produit par le véhicule automobile (11) ;
de détermination (200) d'au moins un premier signal d'essai (W1) par la modification de l'au moins un premier signal d'entrée (V') sélectionné ;
de fourniture (300) d'une unité externe de manipulation de signal (21) pour l'essai de vérification et de validation de la fonction de sécurité du composant de véhicule automobile (12) au moyen de l'au moins un premier signal d'essai (W1) déterminé dans un contexte QM (2) ;
d'interruption (400) de la connexion du composant de véhicule automobile (12) avec le véhicule automobile (11) et d'établissement d'une connexion avec l'unité de manipulation de signal (21), de sorte que le premier signal d'essai (W1) soit présent au niveau de l'entrée (121) du composant de véhicule automobile (12) à la place du premier signal d'entrée (V') ;
de réalisation (500) de l'essai de vérification et de validation de la fonction de sécurité du composant de véhicule automobile (12) au moyen de l'au moins un premier signal d'essai (W1) en utilisant des services XCP normalisés, dans lequel le signal de sortie (F') respectif présent au niveau d'une sortie (122) du composant de véhicule automobile (12) est détecté par l'unité de manipulation de signal (21) ;
d'inspection minutieuse (600) de l'essai de vérification et de validation réalisé avec l'unité de manipulation de signal (21) en dehors du composant de véhicule automobile (12) au moyen d'un troisième signal d'essai (W3) fourni par l'unité de manipulation de signal (21) et d'un signal de sortie de consigne (F) du composant de véhicule automobile (12) ;
d'adaptation (700) de l'au moins un premier et du troisième signal d'essai (W1, W3) par une autre manipulation de signal externe du signal (V, F) respectif sélectionné et la répétition des étapes (500) et (600) avec les signaux d'essai manipulés (W1, W3), si nécessaire jusqu'à ce que le signal de sortie (F') respectif corresponde au signal de sortie de consigne (F) ;
de déverrouillage (800) de la fonction de sécurité vérifiée par l'interruption de la connexion de l'unité de manipulation de signal (21) avec le composant de véhicule automobile (12) et le rétablissement de la connexion du composant de véhicule automobile (12) avec le véhicule automobile (11) par le biais de l'au moins une entrée (121) et de la sortie (122) du composant de véhicule automobile (12).

2. Procédé selon la revendication 1, dans lequel la réalisation (500) de l'essai de vérification et de validation est effectuée en utilisant des services XCP-STIM à l'aide d'une manipulation synchrone dans le temps par l'intermédiaire du bus de véhicule ou d'un adaptateur pour interface de débogage (POD, Plug-On-Device).

3. Procédé selon la revendication 2, dans lequel la manipulation synchrone dans le temps est utilisée pour un prototypage rapide d'une fonction de sécurité du composant de véhicule automobile (12).

4. Système de réalisation d'un procédé selon la revendication 1, présentant, dans un véhicule automobile (11), un composant de véhicule automobile (12) basé sur un logiciel et évalué avec un niveau de danger ASIL A à ASIL D selon la norme ISO 26262 comprenant au moins une entrée (121) et une sortie (122),
**caractérisé en ce que** le système présente en outre :
une unité externe de manipulation de signal (21) pour un essai de vérification et de validation de la fonction de sécurité du composant de véhicule automobile (12) dans un contexte QM (2) selon la norme ISO- 26262 au moyen d'une manipulation d'un premier signal d'entrée (V') présent au niveau de l'entrée (121) et correspondant à un premier signal de commande (V) produit par le véhicule automobile (11), dans lequel
l'unité de manipulation de signal (21) comprend au moins un premier et un second commutateur de changement de statut (211, 212) pour la commande d'une alternance successive entre une première et une seconde position au moyen respectivement d'un signal de commande de statut (S1, S2, S3), dans lequel
l'au moins un premier commutateur de changement de statut (211) est conçu, dans sa première position, pour établir une connexion électrique avec l'entrée (121) et le second commutateur de changement de statut (212) est conçu, dans sa première position, pour établir une connexion électrique avec la sortie (122) du composant de véhicule automobile (12) avec l'unité de manipulation de signal (21) et chaque premier commutateur de changement de statut (211) est conçu, dans sa seconde position, pour établir une connexion électrique de l'au moins une première entrée (121) et le second commutateur de changement de statut (212) est conçu, dans sa seconde position, pour établir une connexion électrique de la sortie (122) du composant de véhicule automobile (12) avec le véhicule automobile (11), dans lequel
l'unité de manipulation de signal (21) est conçue pour produire des signaux d'essai (W1, W2) et pour les fournir à l'au moins une entrée (121) du composant de véhicule automobile (12) par l'intermédiaire de l'au moins un premier commutateur de changement de statut (211) et pour produire un signal d'essai (W3) et le fournir au second commutateur de changement d'état (212) et dans lequel
l'unité de manipulation de signal (21) comprend une mémoire pour la mémorisation et un contrôleur pour l'évaluation de données produites par l'essai de vérification et de validation réalisé par l'unité de manipulation de signal (21) en dehors du composant de véhicule automobile (12).

5. Système selon la revendication 4, dans lequel l'unité externe de manipulation de signal 21 comprend un ordinateur avec un logiciel de manipulation de signal.
